# EUROPEAN PATENT APPLICATION

(11) **EP 0 752 730 A1**
(43) Date of publication of application: **08.01.1997**
(21) Application number: 95941863.3
(22) Date of filing: 25.12.1995
(51) Int. Cl.: H01M 10/44

(54) **DEVICE FOR PREVENTING DEEP DISCHARGE FROM SECONDARY CELL**

(30) Priority: 27.12.1994 JP 325681/94
(71) Applicant: YAMAHA HATSUDOKI KABUSHIKI KAISHA, Iwata-shi Shizuoka-ken, 438 (JP)
(72) Inventor: SAITO, Mikio, Yamaha Hatsudoki Kabushiki Kaisha, Iwata-shi, Shizuoka 438 (JP); ITO, Masaki, Yamaha Hatsudoki Kabushiki Kaisha, Iwata-shi, Shizuoka 438 (JP)
(74) Representative: Grünecker, Kinkeldey, Stockmair & Schwanhäusser Anwaltssozietät
(86) International application number: JP9502652
(87) International publication number: WO9620512

(57) **Abstract**

An object of the present invention is to propose an overdischarge protection device for a secondary battery, in which overdischarge of a secondary battery can be protected surely. The overdischarge protection device includes recharge-necessity decision means 108, a discharge-prevention unit 110, recharge-checking means 105, and a discharge-start unit 116. The recharge-necessity decision means 108 decides whether the secondary battery 39 is necessary to be recharged or not. The discharge-prevention unit 110 prevents the discharge from the secondary battery 39 when the recharge-necessity decision means 108 decides that the secondary battery 39 is necessary to be recharged. The recharge-checking means 105 checks as to whether the secondary battery 39 has been recharged or not. The discharge-start unit 116 causes that the secondary battery 39 can be started to be discharged when recharge-checking means 105 decides that the secondary battery 39 has been recharged.

## Description

### Technical Field

The present invention relates to a technique for preventing overdischarge of a secondary battery, which may be used for motor cars, motor cycles, auxiliary motor-equipped bicycles and the like, so that the lifetime of the secondary battery can be prolonged.

### Background Art

It is known that when a secondary battery is overdischarged, the secondary battery is deteriorated very early and the lifetime is shortened. For this reason, if a secondary battery is used in the above-mentioned electrically operated vehicles, it is desirable that the system for supplying current to the motor is stopped in order to avoid overdischarge of the battery when the voltage of the secondary battery drops to a predetermined value.

However, although the voltage of the secondary battery is lowered after discharge, the voltage may recovers slightly, so as to resume the system. Several times of such resuming of the system results in overdischarge of the secondary battery and eventually, the secondary battery will be deteriorated very early.

### Disclosure of Invention

It is, therefore, an object of the present invention to propose an overdischarge protection device for a secondary battery, in which overdischarge of a secondary battery can be protected surely, and therefore, the lifetime of the secondary battery can be prolonged.

An overdischarge protection device for a secondary battery as defined in claim 1 comprises: recharge-necessity decision means for deciding whether the secondary battery is necessary to be recharged or not; a discharge-prevention unit for preventing discharge from the secondary battery when the recharge-necessity decision means decides that the secondary battery is necessary to be recharged; recharge-checking means for checking as to whether the secondary battery has been recharged or not; and a discharge-start unit for causing that the secondary battery can be started to be discharged when recharge-checking means decides that the secondary battery has been recharged.

An overdischarge protection device as defined in claim 2 is characterized in that in claim 1, the recharge-necessity decision means includes voltage detecting means for detecting voltage of the secondary battery, the recharge-necessity decision means comparing the voltage of the secondary battery detected by the voltage detecting means with a previously stored discharge-stop limit value, the recharge-necessity decision means deciding that the secondary battery is necessary to be recharged when the voltage is equal to or less than the discharge-stop limit value.

An overdischarge protection device as defined in claim 3 is characterized in that in claim 1 or 2, the recharge-checking means compares the voltage of the secondary battery detected by the voltage detecting means with a dischargeable limit value which is set higher than the discharge-stop limit value, the recharge-checking means deciding that the secondary battery has been recharged when the voltage is equal to or greater than the dischargeable limit value.

An overdischarge protection device as defined in claim 4 is characterized in that in claim 1 or 2, the secondary battery is detachably attached to a vehicle, so that the secondary battery can be detached from the vehicle for recharging, the recharge-checking means including a switch for detecting that the secondary battery is attached to or detached from the vehicle.

An overdischarge protection device as defined in claim 5 is characterized in that in claim 1 or 2, the recharge-checking means includes current detecting means for detecting a current which is supplied to the secondary battery for recharging.

### Operation

In accordance with the overdischarge protection device in claim 1, when the recharge-necessity decision means decides that the secondary battery is necessary to be recharged, the discharge-prevention unit prevents the discharge from the secondary battery. Accordingly, overdischarge from the secondary battery can be protected thereafter. In addition, insofar as the secondary battery has been recharged, the secondary battery can be started to be discharged. Therefore, the discharge of the secondary battery will not be resumed although the voltage of the secondary battery recovers after leaving the secondary battery uncharged.

In accordance with the device in claim 2, when the voltage detecting means detects that the lowered voltage of the secondary battery, which indicates that the secondary battery is necessary to be recharged, the discharge-prevention unit prevents the discharge from the secondary battery.

In connection with the device in claim 3, since it is decided as to whether the secondary battery can be started to be discharged or not on the basis of the voltage of the secondary battery, many procedures of the device can be carried out by only software and the production is not costly.

In connection with the device in claim 4, when the switch detects the secondary battery is attached to or detached from the vehicle, it is decided that the secondary battery has been recharged or will be recharged.

In the device in claim 5, it is decided that the secondary battery has been recharged or will be recharged when the current for recharging the secondary battery is detected.

### Brief Description of Drawings

Figure 1 is a side view showing an auxiliary motor-equipped bicycle to which an overdischarge protection device for a secondary battery according to the present invention is applied.

Figure 2 is a block diagram showing a circuit configuration of the overdischarge protection device according to a first embodiment of the present invention.

Figure 3 is a flowchart showing the operation by the first embodiment.

Figure 4 is a block diagram showing a circuit configuration of the overdischarge protection device according to a second embodiment of the present invention.

Figure 5 is a block diagram showing a circuit configuration of the overdischarge protection device according to a third embodiment of the present invention.

### Best Mode for Carrying Out the Invention

### (1) First Embodiment

A first embodiment of the present invention will be described hereinafter with reference to the drawings.

### A. Entire Construction of Bicycle

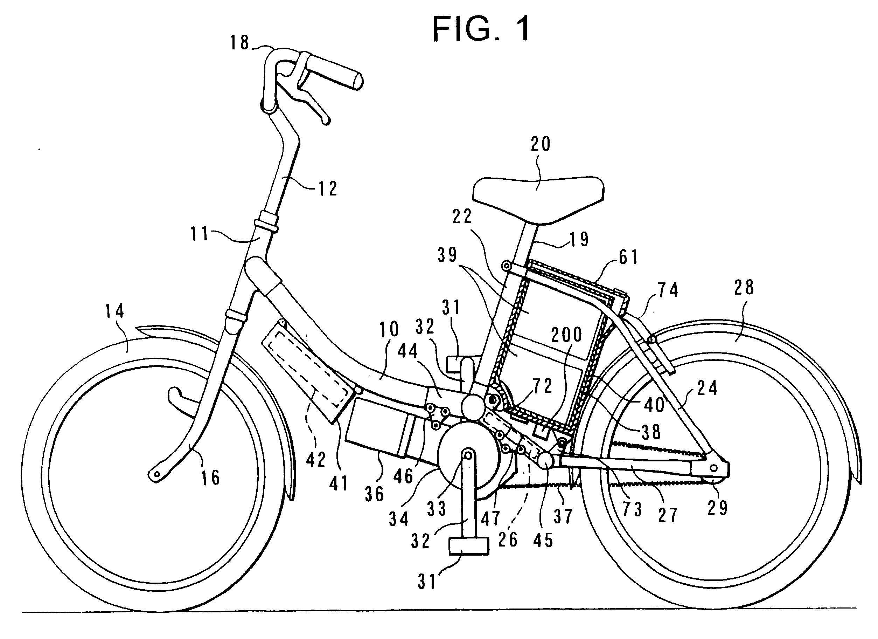

Figure 1 is a side view showing an auxiliary motor-equipped bicycle including an overdischarge protection device for a secondary battery according to the present invention. Before description of the overdischarge protection device, the construction of this bicycle will be described. In the illustration, reference numeral 10 denotes a main tube. A head tube 11 is secured to the front end of the main tube 10. A stem 12 for handling is inserted into the head tube 11, the stem 12 being pivotable about an axis of the head tube 11. A pair of front forks 16 are secured to the lower end of the stem 12. A front wheel is rotatably attached to front forks 16. A handlebar 18, extending leftward and rightward, is secured to the upper end of the stem 12.

The main tube 10 extends obliquely (downwards and backwards) from the front end thereof. A middle lug 44 is secured to the rear end of the main tube 10. A seat tube 22 and a rear tube 26 are secured to the middle lug 44. The main tube 10 is curved to convex downwards, so that the cyclist can easily stride over the main tube 10 for riding even if the cyclist is a woman wearing a skirt.

The seat tube 22 supports a seat post 19 to which a seat 20 is secured. A pair of chain stays 27 are connected to the rear tube 26 via a hanger lug 45. A pair of seat stays 24 are connected to the chain stays 27 and the seat tube 22. As illustrated, the seat tube 22, the seat stays 24, the rear tube 26 and the chain stays 27 cooperate to form a generally rectangular shape, so as to endure the weight of the cyclist. A rear wheel 28 is rotatably attached to the connecting area of the seat stays 24 and the chain stays 27.

A power unit 34 is situated below the middle lug 44 and the hanger lug 45, and are attached to them via brackets 46 and 47. The power unit 34 includes a human power drive system, an electric motor drive system, and a force combining mechanism for combining and harmonizing the force generated by both the systems. A crankshaft 33 is attached to a case of the power unit 34, and cranks 32 are secured respectively to the opposite ends of the crankshaft 33. Pedals 31 are attached to the cranks 32, respectively. Reference numeral 36 denotes an electric motor.

When the cyclist operates the pedals 31, the revolutional power of the crankshaft 33 is transmitted to a chain 37 through a transmission mechanism within the power unit 34, and further transmitted to the rear wheel 28 through a free wheel 29 to cause the rear wheel to rotate. Consequently, the auxiliary motor-equipped bicycle is advanced. On the other hand, when the electric motor 36 is driven, the revolutional power of the rotor of the motor 36 is transmitted to the chain 37 through another mechanism within the power unit 34, thereby also causing the rear wheel to rotate. As described above, this electric motor-equipped bicycle includes two drive systems: one is driven by human power transmitted by the crankshaft 33, and the other is driven by the electric motor 36.

A casing 41 for protecting a controller 42 is suspended from the main tube 10. Electric current is supplied to the electric motor 36 from a rechargeable or secondary battery 39. The electric current supplied from the battery 39 is adjusted by the controller 42. When the human force, i.e., the pedaling force given through the pedals 31, the cranks 32, and the crank shaft 33 is great, the controller 42 increases the electric current supplied to the electric motor 36. In contrast, when the pedaling force is little, the controller 42 decreases the electric current supplied to the electric motor 36. Consequently, when more driving force is necessary, the force by the motor 36 is greatly increased, the force by the human work being increased little.

The battery 39 is contained in an inner box 38 having upper and lower chambers. The cells of the battery 39 are disposed in either of the chambers. The inner box 38 is contained in an outer box 40. The outer box 40 is located between the seat tube 22 and the rear wheel 28, and secured to the seat tube 22, the seat stay 24, and the rear tube 26. In the illustration, reference numeral 61 denotes a lid of the outer box 40. When the lid 40 opens, the inner box 38 can be put into or taken out from the outer box 40. The recharge of battery can be carried out in despite of the fact that the inner box 38 is inside or outside the outer box 40.

### B. Configuration of Overdischarge protection device

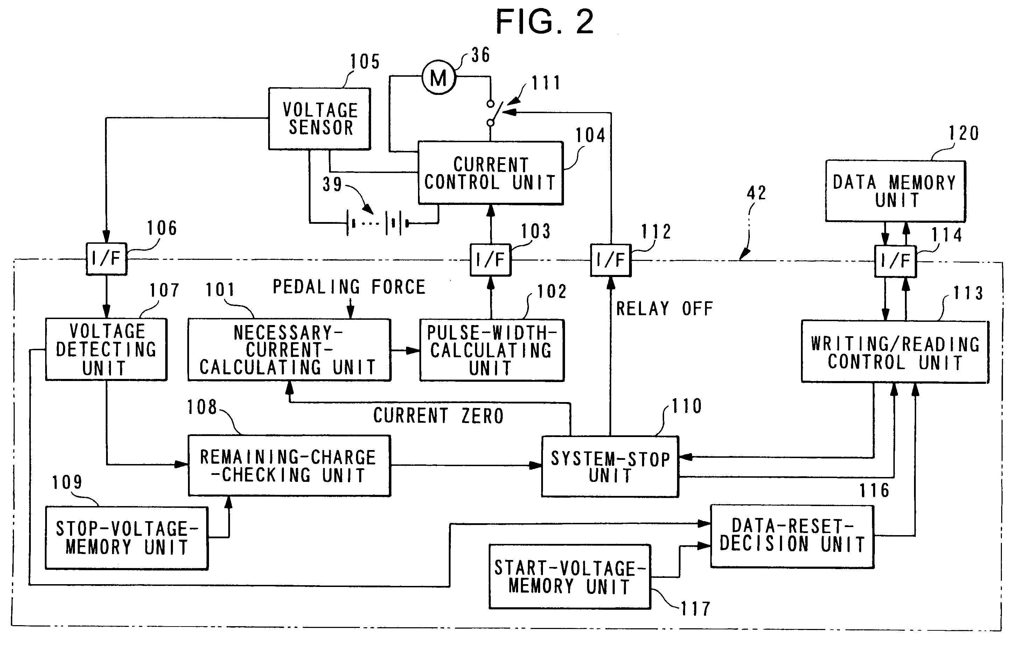

One embodiment of an overdischarge protection device will now be described with reference to Figure 2. Figure 2 is a block diagram showing a schematic configuration of a control circuit of the overdischarge protection device. As shown in Figure 2, a signal indicating the pedaling force (or treading force) for pedaling the pedals 31 is provided to a necessary-current-calculating unit 101 of the controller 42 from a torque sensor (not shown) disposed within the power unit 34. The necessary-current-calculating unit 101 calculates a necessary current for the motor 36 which is proportional to the pedaling force, and provides a signal indicating the result of this calculation to a pulse-width-calculating unit 102. The pulse-width-calculating unit 102 calculates a duty factor of a pulse current for PWM (pulse width modulation) control, the duty factor corresponding to the necessary current for the motor 36. The pulse-width-calculating unit 102 supplies a signal indicating the result of this calculation to a current control unit 104 through an interface 103. The current control unit 104 controls the current supplied from the battery 39 to the motor 36, whereby the current is adjusted to be a pulse current having the duty factor calculated by the pulse-width-calculating unit 102.

A voltage sensor (recharge-necessity decision means, voltage detecting means, and recharge-checking means) 105 is connected to the battery 39. A signal indicating the voltage of the battery 39 is supplied to a voltage detecting unit 107 of the controller 42 through an interface 106. The voltage detecting unit 107 converts the signal into a process signal, and provides this signal to a remaining-charge-checking unit (recharge-necessity decision means) 108 and to a data-reset-decision unit (discharge-start unit) 116, which will be described in detail later. The remaining-charge-checking unit 108 compares the voltage of the battery 39 with a discharge-stop limit value of the battery voltage stored in a stop-voltage-memory unit 109. When the battery voltage is equal to or less than the discharge-stop limit value, the battery should not be discharged. Then, the remaining-charge-checking unit 108 supplies a signal, indicating the result of this comparison, to a system-stop unit (discharge-prevention unit) 110. For example, if the battery voltage is greater than the discharge-stop limit value, the remaining-charge-checking unit 108 supplies a signal of zero to the system-stop unit 110. If not, the remaining-charge-checking unit 108 supplies a signal of one to the system-stop unit 110.

If the battery voltage is greater than the discharge-stop limit value, the system-stop unit 110 supplies an exciting current to a coil of a relay 111 interposed between the electric motor 36 and the current control unit 104. Under different conditions, the system-stop unit 110 does not supply the exciting current. The relay 111 is of a normally open type. Consequently, the relay 111 operates to interconnect the electromagnetic motor 36 and the current control unit 104 when the relay 111 is provided with the exciting current through an interface 112. The relay 111 breaks the connection between the electromagnetic motor 36 and the current control unit 104 when the exciting current is not supplied. With such a structure, when the voltage of the battery 39 drops to be the discharge-stop limit value, the discharge from the battery 39 is prevented.

In addition, when the battery voltage drops to be the discharge-stop limit value, the system-stop unit 110 supplies a signal to the necessary-current-calculating unit 101, the signal causing the necessary-current-calculating unit 101 to output a signal by which the current supplied to the motor is zero. Accordingly, although the contacts of the relay 111 cannot be separated by, e.g., sparking or the like, the discharge from the battery 39 can be prevented certainly.

When the discharge from the battery 39 should prevented, a signal indicating the prevention of discharge is supplied to a writing/reading control unit 113, and the writing/reading control unit 113 supplies this signal to a data memory unit 120 through the interface 114. The data memory unit 120 comprises an IC such as an EPROM, which is provided to the controller 42. The IC is adapted to store the signal, indicating that the discharge should be prevented, as a data.

The writing/reading control unit 113 always reads the stored data in the data memory unit 120. When the data memory unit 120 stores the data indicating that the discharge should be prevented, the writing/reading control unit 113 maintains to supply a signal to the system-stop unit 110, this signal also indicating that the discharge should be prevented. Therefore, it will never occur that the discharge from the battery 39 resumes to be above the discharge-stop limit value although the voltage of the battery recovers when the battery was left in the outer box 40 after the discharge has been stopped.

The battery 39 is recharged in such a manner that the inner box 38 containing the battery 39 is extracted from the outer box 40 and the battery 39 is connected with a domestic electric outlet. After the ending of recharge, the inner box 38 is put into the outer box 40, again. At the same time, the battery 39 is connected with the control circuit in Figure 2. Then, a main switch of the auxiliary motor system is turned on, so that the controller 42 is actuated. Accordingly, the voltage sensor 105 begins to detect the voltage of the battery 39, and the signal indicating the battery voltage is supplied to the voltage detecting unit 107.

As previously mentioned, the process signal, indicating the battery voltage, from the voltage detecting unit 107 is supplied to the data-reset-decision unit 116. The data-reset-decision unit 116 compares the battery voltage with a dischargeable limit value stored in a start-voltage-memory unit 117. When the battery voltage is greater than the dischargeable limit value, the data-reset-decision unit 116 provides a signal to the writing/reading control unit 113, the signal indicating that the data memory unit 120 should be reset. In response, the writing/reading control unit 113 erases the data, indicating that the discharge should be prevented, in the data memory unit 120.

Simultaneously, since the data indicating the prevention of discharge is erased, the writing/reading control unit 113, which always reads data in the data memory unit 120, provides a signal to the system-stop unit 110, the signal indicating the prevention of discharge has been canceled. In response, the system-stop unit 110 supplies the exciting current to the coil of the relay 111. The system-stop unit 110 also cancels to supply the signal for the necessary-current-calculating unit 101, the canceled signal indicating that the necessary current to the motor 36 is zero. Therefore, the current from the battery 39 can be provided to the electric motor 36.

The dischargeable limit value, stored in the start-voltage-memory unit 117, is determined much higher than the battery voltage after it recovers since the battery is left uncharged. In other words, the dischargeable limit value in the start-voltage-memory unit 117 is set much higher than the discharge-stop limit value in the stop-voltage-memory unit 109.

### C. Operation of Embodiment

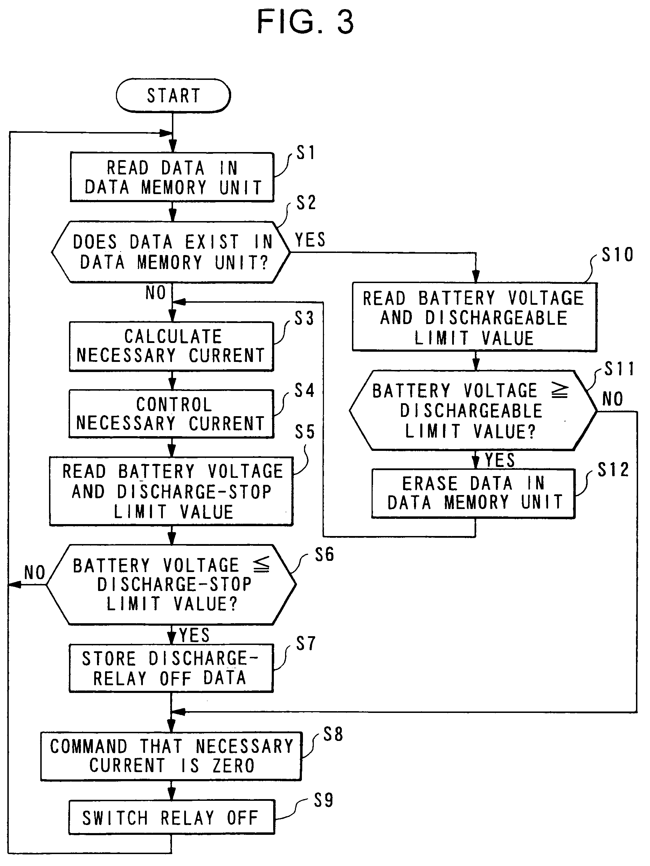

Operation of the above-described overdischarge protection device for a secondary battery will now be described with reference to Figure 3. When the auxiliary motor system of the bicycle is switched on, the controller 42 is actuated. Then, the data stored in the data memory unit 120 is read at step S1. Next, a decision is made as to whether or not the data, indicating the prevention of discharge, exists in the data memory unit 120. If the auxiliary motor system has been switched on when the remained charge of the battery 39 has been enough, the data memory unit 120 does not store the data of the prevention of discharge. Accordingly, NO branch is taken from step S2, and the routine proceeds to step S3 where the necessary current value for the motor 36 is calculated. The necessary current value is proportional to the pedaling force applied to the pedals 31. Then, the current corresponding to the necessary current value is supplied to the electric motor 36 from the battery 39 under control by the current control unit 104 at step S4.

Next, the actual voltage of the battery 39 and the discharge-stop limit value stored in the stop-voltage-memory unit 109 are read at step S5. subsequently, the routine proceeds to step S6, and it is decided as to whether or not the voltage of the battery 39 is less than or equal to the discharge-stop limit value. If the voltage of the battery 39 is greater than the discharge-stop limit value, the routine returns to step S1, and the procedures from step S1 to step S6 are repeated.

On the contrary, if the voltage of the battery 39 is equal to or less than the discharge-stop limit value during the travel of the bicycle, the routine proceeds to step S7. At step S7, the data of the prevention of discharge is memorized in the data memory unit 120. In response, the system-stop unit 110 supplies the signal to the necessary-current-calculating unit 101 at step S8, the signal indicating that the necessary current value for the motor 36 is zero. In addition, the system-stop unit 110 switches the relay 111 off at step S9.

Subsequently, the routine returns to step S1, where the data stored in the data memory unit 120 is read again, and the routine proceeds to step S2. Since the data indicating the prevention of discharge has already been stored in the data memory unit 120 at step S7, YES branch is taken from step S2. Then, the routine jumps to step S10, and the actual voltage of the battery 39 and the dischargeable limit value stored in the start-voltage-memory unit 117 are read. After that, the routine proceeds to step S11, where it is decided as to whether or not the voltage of the battery 39 is greater than the dischargeable limit value.

In this step, if the battery 39 has not yet been recharged, the voltage is less than the dischargeable limit value. Accordingly, NO branch is taken from step S11, and the routine proceeds to step S8. Thus, the signal, indicating that the necessary current value is zero, is continued to be supplied to the necessary-current-calculating unit 101. Besides, the relay 111 is maintained to be off (step S9). Therefore, the battery 39 is prevented to be discharged unless it has been recharged.

On the contrary, if the voltage of the battery 39 becomes equal to or greater than the dischargeable limit value as a result of recharge of the battery, YES branch is taken from step S 11, and the routine proceeds to step S12. At step S12, the data, indicating the prevention of discharge, stored in the data memory unit 120 is erased.

Then, the routine proceeds to step S6 through steps S3, S4, and S5. At step S6, it is decided as to the battery voltage, and NO branch is taken from step S6 since the voltage of the battery 39 is greater than the dischargeable limit value. Thereafter, the procedures in the loop constituted of steps S6, S1, S2, S3, S4, and S5 are executed until the voltage of the battery 39 drops to the discharge-stop limit value.

In accordance with the above-described overdischarge protection device, when the remaining-charge-checking unit 108 decides that the secondary battery 39 is necessary to be recharged, the system-stop unit 110 prevents the discharge from the secondary battery 39. Accordingly, overdischarge from the secondary battery 39 can be prevented. In addition, insofar as the secondary battery 39 has been recharged and the voltage has risen, the data, indicating the prevention of discharge, in the data memory unit 120 is erased. Therefore, the discharge of the secondary battery 39 will not be resumed although the voltage of the secondary battery 39 recovers after leaving the secondary battery 39 uncharged.

In addition, since it is decided as to whether the secondary battery 39 can be started to be discharged or not on the basis of the voltage of the secondary battery 39, many procedures of the device can be carried out by only software and the production is not costly.

### (2) Second Embodiment

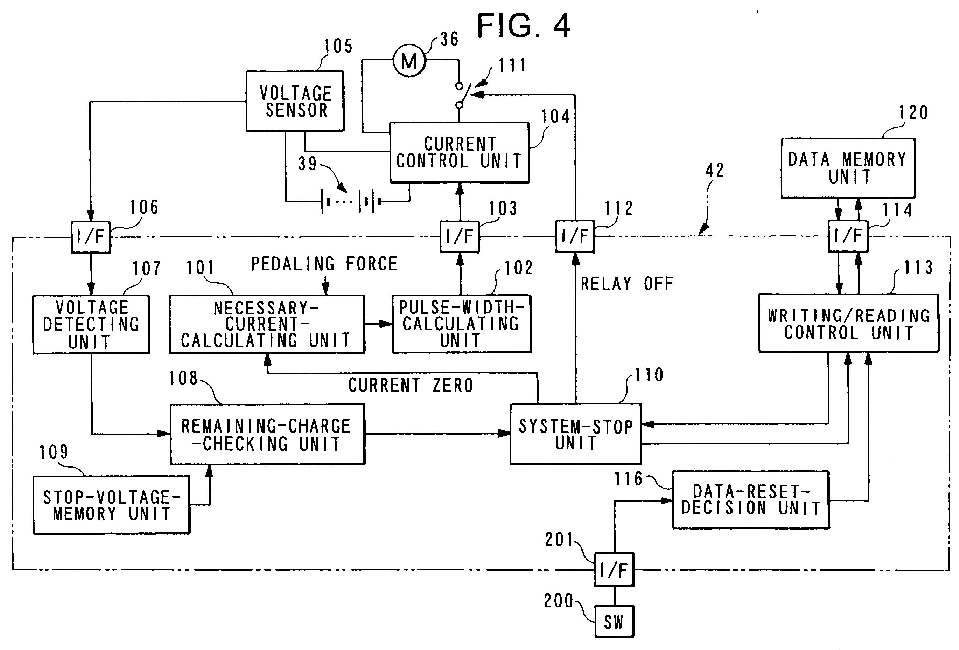

A second embodiment of the present invention will now be described with reference to Figures 1 and 4. The second embodiment is different from the first embodiment in the following point. That is, in the second embodiment, it is decided that the battery 39 has been recharged if it is detected that the inner box 38 containing the battery 39 is extracted from the outer box 40. In Figure 4, the same structural elements as in the first embodiment are denoted by the same reference numerals, and the description thereof will be omitted.

In Figure 1, reference numeral 200 designates a limit switch (recharge checking means). The limit switch 200 has a push button (not shown) protruding extendably from a housing. The limit switch 200 is situated at the bottom of the outer box 40, and the push button projects toward the inner space of the outer box 40. When the inner box 38 is received in the outer box 40, the push button is contracted by the weight of the inner box 38. When the inner box 38 is extracted from the outer box 40, the push button extends, so that the mode of the limit switch 200 is switched.

Figure 4 is a block diagram showing a control circuit according to the second embodiment. In this embodiment, when the mode of the limit switch 200 is switched for the extension of the push button, the controller 42 is switched on, so as to be temporarily actuated, by a special circuit (not shown).

More specifically, when the mode of the limit switch 200 is switched, a signal indicating this fact is supplied to a data-reset-decision unit 116 in Figure 4 through an interface 201. Then, the writing/reading control unit 113, which always reads data in the data memory unit 120, provides a signal to the system-stop unit 110, the signal indicating the prevention of discharge has been canceled. In response, the system-stop unit 110 supplies the exciting current to the coil of the relay 111. The system-stop unit 110 also cancels to supply the signal for the necessary-current-calculating unit 101, the signal indicating that the necessary current to the motor 36 is zero.

Therefore, the current from the battery 39 can be provided to the electric motor 36. Thereafter, the controller 42 is switched off unless the main switch of the auxiliary motor system is turned on.

Similar advantages as in the first embodiment can also be achieved in the second embodiment. Furthermore, in the second embodiment, it is decided that the battery has been recharged if the limit switch 200 detects the extraction of the inner box 38. Thus, the device can be simple and the production is not costly. Additionally, according to the mode change of the limit switch 200, the controller 42 is automatically switched on, whereby the prevention of discharge is canceled. Accordingly, it is unnecessary for the user to operate the switch.

Although the limit switch 200 is of a mechanical type in the second embodiment, it can be replaced by a magnetic type switch or an optical switch.

### (3) Third Embodiment

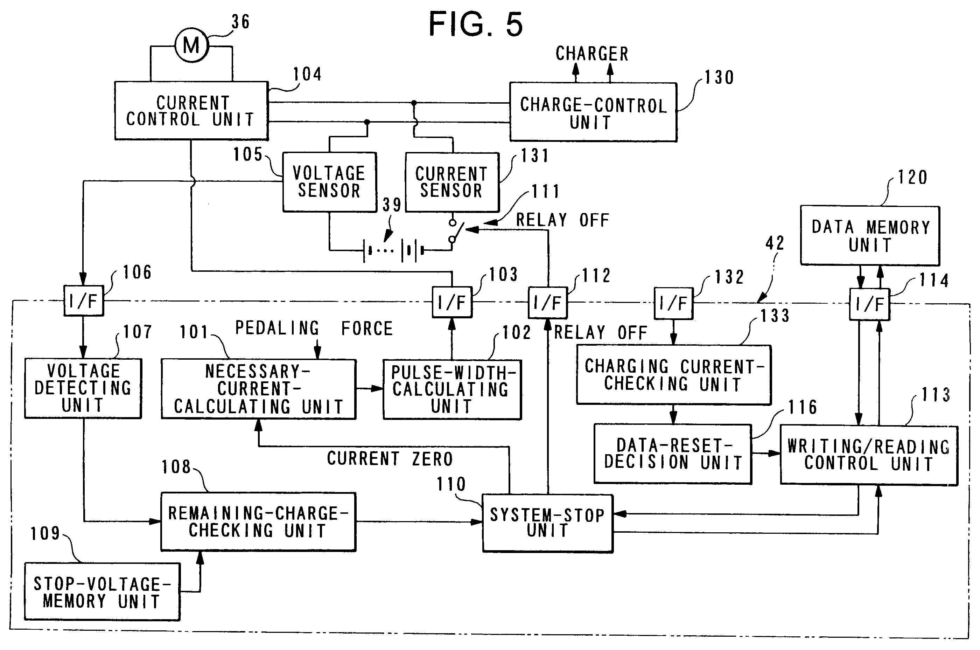

A third embodiment of the present invention will now be described with reference to Figure 5. The third embodiment is different from the first embodiment in that the following points. First, the battery is recharged while the battery is mounted on the bicycle. Second, it is decided that the battery has been recharged when the current for recharge is detected. In Figure 5, the same structural elements as in the first embodiment are denoted by the same reference numerals, and the description thereof will be omitted.

In Figure 5, reference numeral 130 denotes a charge-control unit disposed in the inner box 38 and connected to the controller 42. The charge-control unit 130 is detachably connected with a battery charger which is plugged in a domestic outlet, so that the secondary battery 39 can be recharged. In this embodiment, when the charge-control unit 130 is connected with the battery charger, the relay 111 is switched on for recharging the battery 39 by a special circuit (not shown). Additionally, when it is detected that the charging current is supplied to the battery 39, the controller 42 is switched on, so as to be temporarily actuated by another special circuit (not shown).

In the third embodiment, a current sensor (recharge-checking means) 131 is provided for detecting a current value, the current flowing through the battery 39. The current sensor 131 supplies a signal, corresponding to this value, to a charging current-checking unit 133 through an interface 132.

When the supplied signal indicates that the charging current is equal to or greater than a predetermined value, the charging current-checking unit 133 supplies a signal to the data-reset-decision unit 116, the signal indicating that the battery is begun to be charged. In response, the data-reset-decision unit 116 erases the data, indicating the prevention of discharge, stored in the data memory unit 120.

As a consequence, the writing/reading control unit 113 supplies a signal to the system-stop unit 110, the signal indicating that the prevention of discharge is canceled. In response to this signal, the system-stop unit 110 stops to supply the signal, indicating that the necessary current for the motor 36 is zero, to the necessary-current-calculating unit 101. Accordingly, it is possible to supply a current from the battery 39 to the electric motor. In the third embodiment, the controller 42 is also switched off unless the main switch of the auxiliary motor system is turned on.

Overdischarge can be avoided certainly in the third embodiment. Furthermore, since the prevention of discharge is canceled by the detection of the charging current, the device of the third embodiment can be applied to the battery which is recharged while mounted on the bicycle.

### (4) Modifications or Variations

Although the various features of the present invention has been described with reference to the accompanying drawings, it is to be understood that the invention is not limited to the foregoing description and the various modifications may be made in the invention as will be described in the following.
(I) In the third embodiment, it is decided that the recharge of the secondary battery is carried out when the charging current is detected. In an alternative, detection terminals, which are other than those for charging, may be provided in a coupler for coupling the charge-control unit 130 and the battery charger. In this case, when the battery charger is connected to the charge-control unit 130 via the coupler, the terminals are also connected to each other, so that a detection signal is provided to the data-reset-decision unit 116 from the terminals.
   Specifically, when the detection signal is supplied from the terminals of the coupler, the relay 111 is switched on for recharging the battery 39 by a special circuit (not shown), and the controller 42 is switched on, so as to be temporarily actuated by another special circuit (not shown).
   In addition, the detection signal is provided to the data-reset-decision unit 116. In response, the data-reset-decision unit 116 erases the data, indicating the prevention of discharge, stored in the data memory unit 120. Thereafter, the controller 42 is switched off unless the main switch of the auxiliary motor system is turned on.
(II) In each of the above-mentioned embodiments, the drop of the remaining charge of the battery 39 is detected by the voltage sensor 105. Alternatively, it is possible to measure the discharged value. For this purpose, a circuit may be used which integrates the discharged current over the discharge time. In this case, when the integrated amount reaches a predetermined value, the discharge may be prevented thereafter.
(III) In the third embodiment, another relay may be added between the current control unit 104 and the electric motor 36, and two relays may be switched off when it is necessary to prevent to discharge.

### (5) Advantageous Effects

As described hereinbefore, in accordance with the overdischarge protection device for a secondary battery according to the present invention, after the secondary battery is necessary to be recharged, the discharge from the secondary battery is prevented. In addition, insofar as the secondary battery has been recharged, the secondary battery can be started to be discharged. Accordingly, overdischarge from the secondary batter can be protected certainly. Furthermore, many procedures of the device can be carried out by only software and the production is not costly.

### Industrial Applicability

The present invention relates to a technique for protecting overdischarge of a secondary battery which may be used for motor cars, motor cycles, auxiliary motor-equipped bicycles and the like, so that the lifetime of the secondary battery can be prolonged. The present invention can be applied to an overdischarge protection device.

## Claims

1. An overdischarge protection device for a secondary battery comprising:
recharge-necessity decision means for deciding whether the secondary battery is necessary to be recharged or not;
a discharge-prevention unit for preventing discharge from the secondary battery when the recharge-necessity decision means decides that the secondary battery is necessary to be recharged;
recharge-checking means for checking as to whether the secondary battery has been recharged or not; and
a discharge-start unit for causing that the secondary battery can be started to be discharged when recharge-checking means decides that the secondary battery has been recharged.

2. An overdischarge protection device for a secondary battery according to claim 1, wherein the recharge-necessity decision means includes voltage detecting means for detecting voltage of the secondary battery, the recharge-necessity decision means comparing the voltage of the secondary battery detected by the voltage detecting means with a previously stored discharge-stop limit value, the recharge-necessity decision means deciding that the secondary battery is necessary to be recharged when the voltage is equal to or less than the discharge-stop limit value.

3. An overdischarge protection device for a secondary battery according to claim 1 or 2, wherein the recharge-checking means compares the voltage of the secondary battery detected by the voltage detecting means with a dischargeable limit value which is set higher than the discharge-stop limit value, the recharge-checking means deciding that the secondary battery has been recharged when the voltage is equal to or greater than the dischargeable limit value.

4. An overdischarge protection device for a secondary battery according to claim 1 or 2, wherein the secondary battery is detachably attached to a vehicle, so that the secondary battery can be detached from the vehicle for recharging, the recharge-checking means including a switch for detecting that the secondary battery is attached to or detached from the vehicle.

5. An overdischarge protection device for a secondary battery according to claim 1 or 2, wherein the recharge-checking means includes current detecting means for detecting a current which is supplied to the secondary battery for recharging.
